# EUROPÄISCHE PATENTSCHRIFT

(11) **EP 3 430 715 B1**
(45) Veröffentlichungstag und Bekanntmachung des Hinweises auf die Patenterteilung: **15.04.2020**
(21) Anmeldenummer: 16722840.2
(22) Anmeldetag: 04.05.2016
(51) Int. Cl.: H02M 7/483, H01F 27/38, H01F 30/12, H02J 3/26, H02J 3/36, H02M 7/49, H02H 9/08

(54) **UMRICHTERANORDNUNG MIT STERNPUNKTBILDNER**
CONVERTER ARRANGEMENT HAVING A GROUNDING TRANSFORMER
ENSEMBLE CONVERTISSEUR DOTÉ D'UNE RÉACTANCE DE MISE À LA TERRE

(43) Veröffentlichungstag der Anmeldung: 23.01.2019
(73) Patentinhaber: Siemens Aktiengesellschaft, 80333 München (DE)
(72) Erfinder: SCHÖN, Andre, 91096 Möhrendorf (DE); ARMSCHAT, Christoph, 91058 Erlangen (DE); SÖRANGR, Dag, 91052 Erlangen (DE)
(86) Internationale Anmeldenummer: PCT/EP2016/060061
(87) Internationale Veröffentlichungsnummer: WO 2017/190782

(56) Entgegenhaltungen:
- EP-A2- 1 855 366
- WO-A1-2005/001857
- WO-A1-2005/109593
- WO-A1-2011/150962
- WO-A2-2011/006796
- DE-A1- 10 042 283

## Beschreibung

Die Erfindung betrifft eine Umrichteranordnung mit einem zwischen einem Wechselspannungsnetz und einem Gleichspannungskreis schaltbaren Umrichter, der Leistungshalbleiterventile aufweist, die sich jeweils zwischen einem Wechselspannungsanschluss und einem Gleichspannungsanschluss erstrecken, wobei jedes Leistungshalbleiterventil eine Reihenschaltung zweipoliger Submodule umfasst, die Leistungshalbleiter umfassen, sowie einem wechselspannungsseitig des Umrichters angeordneten Sternpunktbildner, der zu einem geerdeten Sternpunkt verschaltete Drosselspulen aufweist.

Eine solche Umrichteranordnung ist aus der DE 10 2009 034 354 A1 bekannt. Die bekannte Umrichteranordnung wird dazu eingesetzt, eine Übertragung elektrischer Energie zwischen einem Wechselspannungsnetz und einem Gleichspannungsnetz zu ermöglichen. Dazu ist der Umrichter mittels des Gleichspannungsanschlusses mit dem Gleichspannungskreis bzw. einer Gleichspannungsleitung und mittels des Wechselspannungsanschlusses mit dem Wechselspannungsnetz verbunden. Die Umrichteranordnung kann dabei beispielsweise Teil einer Hochspannungsgleichstromübertragungsanlage (HGÜ) sein. Der Umrichter der bekannten Umrichteranordnung ist ein sogenannter modularer Mehrstufenumrichter (MMC). Jedes Leistungshalbleiterventil des MMC umfasst eine Reihenschaltung zweipoliger Submodule. Das Submodul umfasst wiederum Leistungshalbleiterschalter sowie einen Energiespeicher, meist in Form eines Kondensators. Die Leistungshalbleiterschalter sind derart mit dem Energiespeicher verschaltet, dass durch geeignete Steuerung der Leistungshalbleiterschalter an den Polen bzw. Klemmen des Submoduls eine Spannung null oder eine an dem Energiespeicher abfallende Energiespeicherspannung erzeugbar sind. Die Leistungshalbleiterschalter und die Submodule sind voneinander unabhängig steuerbar, so dass mittels des MMC wechselspannungsseitig eine stufenförmige Umrichterwechselspannung erzeugbar ist, deren Stufenhöhe im Wesentlichen durch die Energiespeicherspannung und die erzeugbare Stufenanzahl durch die Anzahl der Submodule des Leistungshalbleiterventils bestimmt sind. Aufgrund des Aufbaus und der Funktionsweise des MMC können Pole des Gleichspannungskreises bezüglich des Erdpotenzials grundsätzlich Spannungen mit unterschiedlich hohen Beträgen aufweisen. Insbesondere in einer Ausführung als sogenannter symmetrischer Monopol gibt es keine starre Anbindung des Umrichters bzw. des Gleichspannungskreises an das Erdpotenzial. In einem solchen Fall können Fremdschichtströme, die auf den Oberflächen von Isolatoren gegen Erde abfließen einen resultierenden Gleichstrom gegen Erde bewirken. Dieser resultierende Gleichstrom kann sich auf der Wechselspannungsseite des Umrichters nachteilig auswirken. Der Sternpunktbildner der bekannten Umrichteranordnung ist dazu vorgesehen, die Spannungen im Gleichspannungskreis gegenüber dem Erdpotenzial zu symmetrieren. Dazu sind die Drosselspulen derart ausgestaltet, dass sie für Wechselstrom mit einer Grundschwingungsfrequenz des Wechselspannungsnetzes einen Strompfad mit einer hohen Impedanz zum Erdpotenzial darstellen. Zugleich bilden die Drosselspulen für einen Gleichstrom einen Strompfad mit einer niedrigen Impedanz zum Erdpotenzial. Auf diese Weise ist eine Potenzialanbindung der Umrichteranordnung an das Erdpotenzial realisiert. Der Sternpunktbildner ist dabei wechselspannungsseitig parallel zum Wechselspannungsnetz zwischen dem Umrichter und einem Transformator angeordnet. Jede Drosselspule des Sternpunktbildners ist auf der dem Sternpunkt abgewandten Seite mit einer ihr zugeordneten Phase des Wechselspannungsnetzes verbunden bzw. über eine Schalteinheit verbindbar. Die Wechselströme mit der Grundschwingungsfrequenz des Wechselspannungsnetzes, üblicherweise beträgt diese Grundschwingungsfrequenz 50 Hz oder 60 Hz, können über den Sternpunktbildner nicht abfließen. Die durch eine Asymmetrie der Spannungen im Gleichspannungskreis entstehenden Gleichströme können hingegen über den Sternpunktbildner abfließen und diesen damit symmetrieren.

Aus dem Beitrag von O. Samuelsson "Power Transformer immune to Geomagnetically Induced Currents", IEEE 2013, ist eine Anordnung eines Transformators bekannt, bei der mittels Kompensationswicklungen der Einfluss der resultierenden Gleichströme auf die Magnetisierung des Transformators vermindert wird.

Eine Anordnung zum Schutz eines Versorgungsnetztes vor geomagnetisch induzierten Strömen, die einen DC-Ableiter umfasst, der über einen gemeinsamen Spulenkern verfügende Drosseln aufweist, ist aus der WO 2005/109593 A1 bekannt.

Die Aufgabe der vorliegenden Erfindung besteht darin, eine artgemäße Umrichteranordnung vorzuschlagen, bei der eine weiter verbesserte Symmetrierung des Gleichspannungskreises möglich ist.

Die Aufgabe wird bei einer artgemäßen Umrichteranordnung dadurch gelöst, dass die Drosselspulen einen gemeinsamen Spulenkern aufweisen.

Die Drosselspulen sind demnach von einem gemeinsamen Spulenkern durchsetzt, geeigneterweise aus einem ferromagnetischen Material, beispielsweise aus Eisen. Die Drosselspulen können beispielsweise als ein Transformator ohne Sekundärwicklung ausgeführt sein. Der Spulenkern ist zweckmäßigerweise mehrschenklig, bei einem dreiphasigen Wechselspannungsnetz entsprechend dreischenklig.

Ein Vorteil der vorliegenden Erfindung ist es, dass durch den gemeinsamen Spulenkern eine hohe Mitsysteminduktivität der Wechselströme der einzelnen Phasen des Wechselspannungsnetzes zum Sternpunkt gebildet ist. Der magnetische Fluss im gemeinsamen Spulenkern addiert sich bei einem symmetrischen Wechselspannungssystem zu null. Durch die magnetische Kopplung wird demnach die Impedanz für das Mitsystem stark erhöht, die Mitsysteminduktivität begrenzt effektiv den Wechselstrom der Grundschwingungsfrequenz.

Ein zusätzlicher Vorteil ergibt sich durch eine erhöhte Strombelastbarkeit des Sternpunktbildners der erfindungsgemäßen Umrichteranordnung gegenüber Gleichströmen.

Die magnetisch gekoppelten Drosselspulen können darüber hinaus miteinander in einem gemeinsamen Gehäuse untergebracht werden, wodurch sich eine besonders kompakte Bauweise des Sternpunktbildners ergibt. Zudem ist es in diesem Fall möglich, die Isolierung mittels Ölen oder Estern in dem gemeinsamen Gehäuse bereitzustellen.

Vorzugsweise ist jede Drosselspule von einem ihr zugeordneten Teilkern des gemeinsamen Kerns durchdrungen, wobei jeder Teilkern einen Luftspalt begrenzt. Der Luftspalt ist dabei jeweils derart bemessen, dass jede Drosselspule eine vorbestimmte Induktivität und einen vorbestimmten Sättigungspunkt bei einem vorgegebenen Umrichtergleichstrom aufweist. Demnach sind in die Teilkerne des gemeinsamen Spulenkerns gezielt Luftspalte eingebracht. Mittels des zugehörigen Luftspaltes bzw. dessen Breits kann ein Sättigungspunkt der Drosselspule entsprechend gezielt gesteuert werden. Dies erlaubt vorteilhaft einen definierten Sättigungspunkt (auch als Sättigungsknick bezeichnet) in der Induktivität der Drosselspule einzustellen, wie er zum Beispiel bei einem Fehlerzustand in der Umrichteranordnung vorteilhaft ist. Der Sättigungspunkt bezieht sich auf eine Darstellung der Abhängigkeit des Zeitintegrals der Spannung Φ vom Gleichstrom IDC, bei der der Sättigungspunkt eine schnelle Änderung ("Knick") der Induktivität L = ΔΦ/ΔIDC im Bereich zwischen einer ungesättigten Induktivität L1 bei niedrigen Gleichströmen und einer gesättigten Induktivität L2 bei hohen Gleichströmen anzeigt. Üblicherweise ist die ungesättigte Induktivität L1 höher als die gesättigte Induktivität L2. Auf diese Weise kann gezielt sowohl eine vorbestimmte ungesättigte Induktivität der Drosselspule in einem Normalbetrieb als auch eine gesättigte Induktivität in einem Fehlerfall realisiert werden. Insbesondere kann eine kleine Induktivität in einem Fehlerfall, beispielsweise bei einem unsymmetrischen Erdschluss im Gleichspannungskreis, vorteilhaft sein, weil dadurch vergleichsweise kleine Abklingzeiten für den Fehlerstrom erreicht werden können.

Bevorzugt umfasst die Umrichteranordnung ferner eine Nullsystemdrossel, die zwischen dem Sternpunkt und Erdanbindung angeordnet ist. Diese Nullsystemdrossel kann mit einem ferromagnetischen Kern, vorzugsweise einem Eisenkern ausgestattet sein. Zudem kann der Eisenkern einen Luftspalt aufweisen, der eine gezielte Festlegung der Induktivität und des Sättigungspunktes der Nullsystemdrossel erlaubt. Die Nullsystemdrossel ist dazu vorgesehen, die Anstiegsgeschwindigkeit des Nullsystemstromes durch den Sternpunktbildner zu begrenzen. Zudem lassen sich Ströme, die durch eine dritte Harmonische des Wechselstromes verursacht werden, ebenfalls mittels der Nullsystemdrossel unterdrücken. Eine solche dritte Harmonische auf der Grundschwingungsfrequenz wird oftmals erzeugt, um eine Reduktion von Isolationspegeln in der Umrichteranordnung zu erreichen. Durch die Nullsystemdrossel ist eine hohe Impedanz gegenüber einer solchen dritten Harmonischen der Wechselspannung erzielbar.

Der Sternpunktbildner kann beispielsweise zwischen einem wechselspannungsseitig des Umrichters angeordneten Transformator und dem Wechselspannungsanschluss des Umrichters angeordnet sein. Die Drosselspulen können dabei direkt mit den ihnen zugeordneten Phasen der Wechselspannungsleitung parallel zum Transformator schaltbar sein.

Erfindungsgemäß ist jeder Drosselspule des Sternpunktbildners eine Kompensationswicklung zugeordnet, wobei die Kompensationswicklungen in einer elektrischen Reihenschaltung zwischen dem Sternpunkt und Erde angeordnet sind, wobei die Kompensationswicklungen und die Drosselspulen einen gemeinsamen Spulenkern aufweisen. Durch die Kompensationswicklungen lässt sich die Impedanz gegenüber der Grundschwingungsfrequenz des Wechselspannungsnetzes weiter erhöhen. Dabei kann die Windungszahl der Kompensationswicklungen beispielsweise 1/3 der Windungszahl der Drosselspulen betragen. Diese Ausführungsform der Erfindung weist den Vorteil auf, dass der Sternpunktbildner eine verhältnismäßig niedrige Nullsystemimpedanz im Normalbetrieb und eine hohe Nullsystemimpedanz in einem gleichspannungsseitigen Fehlerfall aufweist.

In einigen Anwendungen ist es von Vorteil, wenn wechselspannungsseitig des Umrichters ein Transformator angeordnet ist. Der Transformator weist netzseitige sowie konverterseitige Wicklungen auf und verbindet den Umrichter mit einem netzseitigen Wechselspannungsnetz. Die netzseitigen Wicklungen können beispielsweise in einer Sternanordnung, die konverterseitigen Wicklungen beispielsweise in einer Delta- oder Sternanordnung angeordnet sein. Der Sternpunkt der konverterseitigen Sternanordnung kann geerdet sein. Der aus der Unsymmetrie im Gleichspannungskreis resultierende Gleichstrom (auch als Erdstrom bezeichnet) kann in diesem Fall eine nachteilige Vormagnetisierung im Transformator bewirken.

Gemäß der Erfindung sind die Drosselspulen des Sternpunktbildners als konverterseitige Wicklungen des Transformators ausgebildet, der wechselspannungsseitig des Umrichters angeordnet ist. Die Kompensationswicklungen sind zugleich als Tertiärwicklungen des Transformators ausgebildet, wobei ein Wickelsinn der Kompensationswicklungen einem Wickelsinn der zugeordneten Drosselspulen entgegengerichtet ist und der Transformator und der Sternpunktbildner einen gemeinsamen Spulenkern aufweisen. Der gemeinsame Spulenkern durchsetzt demnach sowohl die netzseitigen und die konverterseitigen Wicklungen des Transformators als auch die Kompensationswicklungen. Der resultierende Gleichstrom in der Umrichteranordnung fließt gemäß dieser Ausführungsform verteilt durch die konverterseitigen Wicklungen des Transformators und in Summe durch die Kompensationswicklungen. Durch die gegensinnig orientierten Kompensationswicklungen wird eine im Spulenkern entstehende magnetische Spannung kompensiert. Auf diese Weise lässt sich die zuvor beschriebene Vormagnetisierung des Transformators vorteilhaft vermeiden. Aus diesem Effekt resultiert zudem eine Verringerung von Störgeräuschen im Transformator.

Alternativ ist der Sternpunktbildner zwischen einem wechselspannungsseitig des Umrichters angeordneten Transformator und dem Wechselspannungsanschluss des Umrichters angeordnet, wobei ein Wickelsinn der Kompensationswicklungen und der Drosselspulen gleichgerichtet ist. Gemäß dieser Ausführungsform bilden die Kompensationswicklungen eine Reihenschaltung aus, die einerseits mit dem Sternpunkt des Sternpunktbildners und anderseits mit einem Erdanschluss verbunden ist. Der Wickelsinn jeder Kompensationswicklung ist zum Wickelsinn der zugeordneten Drosselspule gleichgerichtet. Die Vorteile dieser Anordnung sind eine besonders hohe Nullsystemimpedanz im Normalbetrieb und eine niedrige Nullsystemimpedanz in einem gleichspannungsseitigen Fehlerfall. Zur gezielten Festlegung der Nullsysteminduktivität und des Sättigungspunktes können auch hier Luftspalte in jeden Eisenschenkel des gemeinsamen Spulenkerns eingebracht werden. Ferner kann die dritte Harmonische in der Wechselspannung effizient unterdrückt werden.

Erfindungsgemäß weist der Sternpunktbildner eine Schalteinheit auf, die zwischen den Kompensationswicklungen und Erde bzw. Erdanschluss angeordnet ist. Die Schalteinheit umfasst bevorzugt eine Parallelschaltung aus einem Widerstandselement und einem Schaltelement. Das Widerstandselement kann ein nichtlineares Widerstandselement sein. Das Schaltelement weist zweckmäßigerweise eine bidirektionale Abschaltfähigkeit für Gleichströme auf, ist also geeigneterweise ein bidirektionaler Gleichstromschalter. Im Normalbetrieb kann das Schaltelement geschlossen sein. Im Falle eines Erdschlusses im Gleichspannungskreis (zum Beispiel einem Blitzschlag in einer Freileitung) kann das Schaltelement geöffnet werden. Auf diese Weise kann ein entsprechender Fehlerstrom begrenzt werden. Zudem kann eine kurze Abklingzeit für den Fehlerstrom erreicht werden.

Bevorzugt umfasst die Schalteinheit wenigstens einen mechanischen Leistungsschalter und/oder wenigstens einen Halbleiterschalter. Beispielsweise kann das Schaltelement dem Fachmann bekannte IGBT's (,integrated gate bipolar transistors') umfassen, die einen sogenannten solid state DC breaker ausbilden. Alternativ oder in Kombination kann das Schaltelement ein entsprechend beschalteter mechanischer Leistungsschalter sein. Das Widerstandselement kann beispielsweise ein nicht lineares Widerstandselement (Überspannungsableiter) mit einer Ansprechspannung von 50 kV bis 100 kV sein.

Vorzugsweise umfasst der Sternpunktbildner einen weiteren Überspannungsableiter, der zwischen dem Sternpunkt und Erde parallel zu den Kompensationswicklungen geschaltet ist. Dieser Überspannungsableiter sorgt für eine Spannungsbegrenzung in einem Fehlerfall.

Gemäß einer Ausführungsvariante der Erfindung weist jedes Submodul eine Vollbrückenschaltung mit vier abschaltbaren Leistungshalbleitern und einem Energiespeicher auf, die so mit dem Energiespeicher verschaltet sind, dass an Ausgangsklemmen des Submoduls eine an dem Energiespeicher abfallende Energiespeicherspannung, eine Nullspannung oder aber die inverse Energiespeicherspannung erzeugbar ist.

Gemäß einer weiteren Ausführungsvariante weist jedes Submodul eine Halbbrückenschaltung mit zwei abschaltbaren Leistungshalbleitern und einem Energiespeicher auf, die so mit dem Energiespeicher verschaltet sind, dass an Ausgangsklemmen des Submoduls eine an dem Energiespeicher abfallende Energiespeicherspannung oder eine Nullspannung erzeugbar ist.

Ferner ist es denkbar, dass ein Teil der Submodule des Umrichters als Vollbrückenschaltungen und ein weiterer Teil der Submodule als Halbbrückenschaltungen ausgebildet sind.

Es ist hierbei anzumerken, dass die Anwendung der Erfindung nicht auf modulare Mehrstufenumrichter beschränkt ist. Es ist beispielsweise denkbar, dass die Submodule jeweils einen ein-und abschaltbaren Leistungshalbleiter und eine antiparallele Freilaufdiode umfassen. In diesem Fall ist der Umrichter als ein Zwischenkreisumrichter ausgebildet, der einen Gleichspannungszwischenkreis aufweist, in dem ein Zwischenkreiskondensator angeordnet ist.

Die Erfindung soll im Folgenden anhand von in den Figuren 1 bis 4 dargestellten Ausführungsbeispiele weiter erläutert werden.
Figur 1 zeigt ein erstes Ausführungsbeispiel der erfindungsgemäßen Umrichteranordnung in einer schematischen Darstellung;
Figur 2 zeigt ein zweites Ausführungsbeispiel der erfindungsgemäßen Umrichteranordnung in einer schematischen Darstellung;
Figur 3 zeigt ein drittes Ausführungsbeispiel der erfindungsgemäßen Umrichteranordnung in einer schematischen Darstellung;
Figur 4 zeigt ein Ausführungsbeispiel eines Umrichters der erfindungsgemäßen Umrichteranordnung in einer schematischen Darstellung.

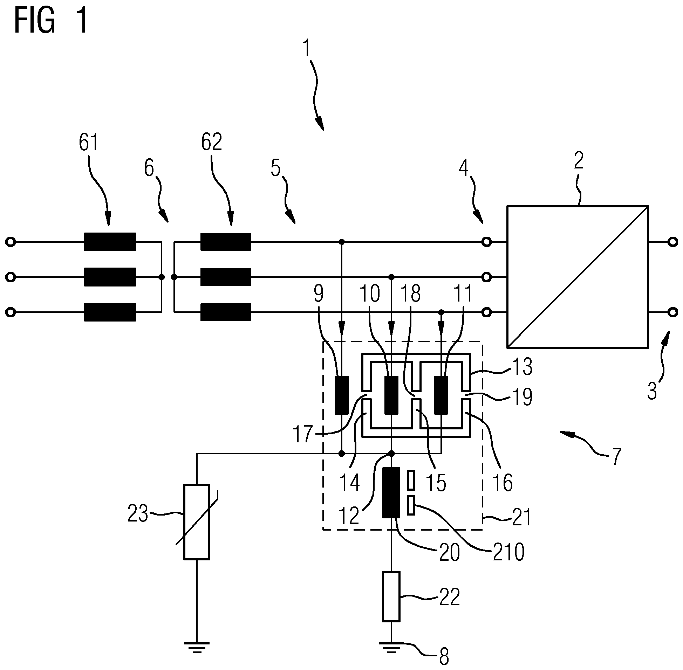

Im Einzelnen ist in Figur 1 eine Umrichteranordnung 1 gezeigt. Die Umrichteranordnung 1 umfasst einen Umrichter 2. Der Umrichter 2 weist eine Gleichspannungsseite, die mit einem Gleichspannungskreis, beispielsweise einem Gleichspannungszwischenkreis einer HGÜ-Anlage oder einem Gleichspannungsnetz mittels eines Gleichspannungsanschlusses 3 verbindbar ist. Ferner weist der Umrichter 2 eine Wechselspannungsseite auf, die mittels Wechselspannungsanschlusses 4 mit einem Wechselspannungsnetz 5 verbindbar ist, das im vorliegenden Beispiel dreiphasig ist. Im in Figur 1 dargestellten Ausführungsbeispiel erfolgt die Anbindung an das Wechselspannungsnetz 5 über einen Transformator 6. Der Transformator 6 umfasst netzseitige Wicklungen 61 und konverterseitige Wicklungen 62 auf der dem Umrichter 2 zugewandten Seite des Transformators 6. Sowohl die netzseitigen Wicklungen 61 als auch die konverterseitigen Wicklungen 62 sind jeweils in einer Sternschaltung miteinander verbunden.

Im Prinzip ist jedoch auch jede andere geeignete Konfiguration des Transformators möglich, beispielsweise eine SternDreieck-Konfiguration.

Zwischen dem Transformator 6 und dem Umrichter 2 ist ein Sternpunktbildner 7 angeordnet, der parallel zum Wechselspannungsnetz 5 geschaltet ist, bzw. zwischen den Phasen des Wechselspannungsnetzes 5 und einem Erdanschluss 8.

Der Sternpunktbildner 7 umfasst eine erste Drosselspule 9, eine zweite Drosselspule 10 und eine dritte Drosselspule 11. Jede Drosselspule 9-11 ist mit einer ihr zugeordneten Phase des Wechselspannungsnetzes 5 verbunden. Auf der dem Wechselspannungsnetz 5 abgewandten Seite sind die Drosselspulen 9-11 zu einem gemeinsamen Sternpunkt 12 zusammengeschaltet. Die drei Drosselspulen 9-11 weisen einen gemeinsamen Spulenkern 13. Dabei ist jede Drosselspule 9, 10 bzw. 11 von einem Teilkern 14, 15 bzw. 16 des gemeinsamen Spulenkerns 13 durchsetzt. Jeder Teilkern 14, 15 bzw. 16 weist einen Luftspalt 17, 18 bzw. 19 auf, dessen Funktion bereits zuvor beschrieben wurde.

Zwischen dem gemeinsamen Sternpunkt 12 und dem Erdanschluss bzw. der Erdanbindung ist eine Nullsystemdrossel 20 angeordnet, die einen eigenen Eisenkern 210 mit einem Luftspalt aufweist.

Die Drosselspulen 9-11 sowie die Nullsystemdrossel 20 sind in einem gemeinsamen Gehäuse 21 angeordnet, das beispielsweise eine Ölisolation, eine SF₆-Isolation, eine Ester-Isolation oder dergleichen bereitstellt.

In einer Reihenschaltung zu der Nullsystemdrossel 20 befindet sich ein Widerstandselement 22, das zur Strombegrenzung dient. Parallel zu der Reihenschaltung der Nullsystemdrossel 20 und des Widerstandselementes 22 ist ein Überspannungsableiter 23 zur Spannungsbegrenzung angeordnet.

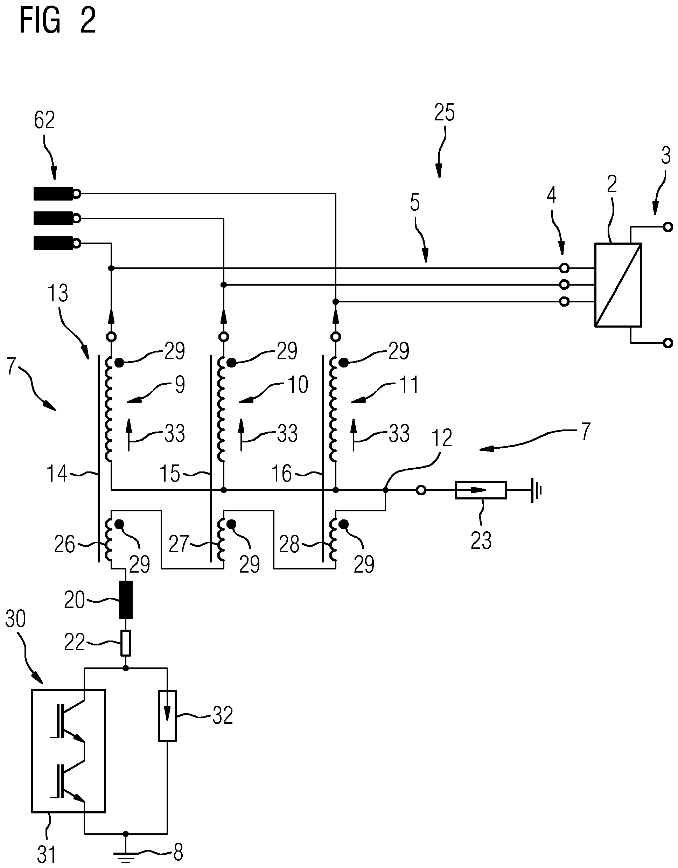

Figur 2 zeigt ein zweites Ausführungsbeispiel einer Umrichteranordnung 25. In den Figuren 1 und 2 wurden gleiche bzw. gleichartige Elemente der Umrichteranordnungen 1 bzw. 25 mit gleichen Bezugszeichen versehen. Aus Übersichtlichkeitsgründen wurden in der Darstellung der Figur 2 die Luftspalte der Teilkerne 14-16 nicht explizit dargestellt. Der Aufbau des Spulenkerns 13 entspricht hierbei jedoch grundsätzlich demjenigen des Spulenkerns 13 der Figur 1.

Die Umrichteranordnung 25 der Figur 2 unterscheidet sich von der Umrichteranordnung 1 der Figur 1 dadurch, dass der ersten Drosselspule 9 eine erste Kompensationswicklung 26, der zweiten Drosselspule 10 eine zweite Kompensationswicklung 27 und der dritten Drosselspule 11 eine dritte Kompensationswicklung 28 zugeordnet sind. Die Kompensationswicklungen 26-28 sind in einer Reihenschaltung zwischen dem gemeinsamen Sternpunkt 12 und dem Erdanschluss 8 angeordnet. Es ist zu erkennen, dass der gemeinsame Spulenkern 13 auch die Kompensationswicklungen 26-28 durchsetzt. Der Wicklungssinn der Drosselspulen 9-11 und der Kompensationswicklungen 26-28 ist in Figur 2 anhand von Punkten 29 angedeutet. Es ist erkennbar, dass der Wickelsinn der Kompensationswicklungen 26-28 gleichgerichtet zum Wickelsinn der Drosselspulen 9-11 ist.

Ferner umfasst die Umrichteranordnung 25 eine Schalteinheit 30, die zwischen den Kompensationswicklungen 26-28 und dem Erdanschluss 8 angeordnet ist. Die Schalteinheit 30 umfasst eine Parallelschaltung aus einem Schaltelement 31 und einem nichtlinearen Widerstandselement 32. Im vorliegenden Ausführungsbeispiel ist das Schaltelement 31 ein solid state breaker mit einer Reihenschaltung mehrerer Leistungshalbleiterschalter. Die Richtung der Gleichströme im Sternpunktbildner 7 ist durch Pfeile 33 angedeutet.

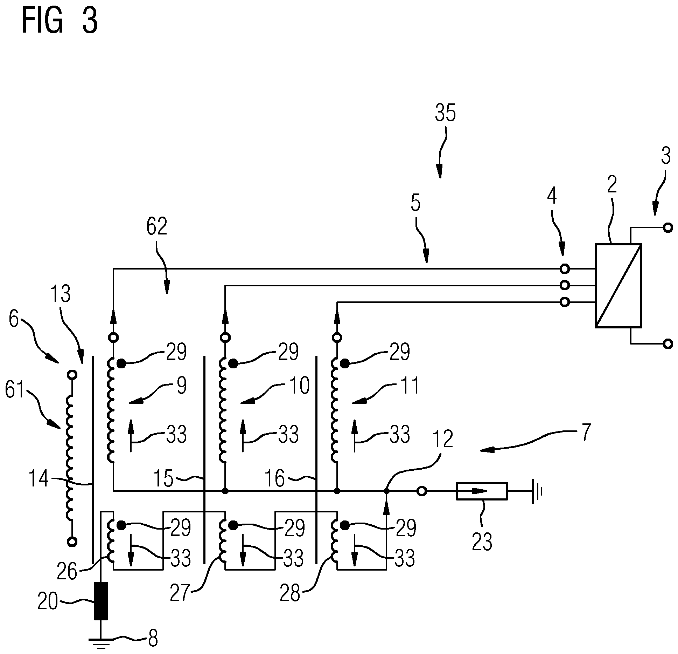

In Figur 3 ist ein drittes Ausführungsbeispiel einer Umrichteranordnung 35 dargestellt. In den Figuren 1 und 2 wurden gleiche bzw. gleichartige Elemente der Umrichteranordnungen 1, 25 bzw. 35 mit gleichen Bezugszeichen versehen. Aus Übersichtlichkeitsgründen wurden in der Darstellung der Figur 2 die Luftspalte der Teilkerne 14-16 nicht explizit dargestellt. Der Aufbau des Spulenkerns 13 entspricht hierbei jedoch grundsätzlich demjenigen des Spulenkerns 13 der Figur 1. Die Drosselspulen 9-11 der Umrichteranordnung 35 sind als die konverterseitige Wicklung 62 des Transformators 6 ausgeführt. Aus Übersichtlichkeitsgründen wurde nur eine der drei netzseitigen Wicklungen 61 des Transformators 6 figürlich dargestellt. Es ist jedoch erkennbar, dass die Schenkel bzw. Teilkerne 14-16 des Spulenkerns 13 sowohl die Drosselspulen 9-11, die netzseitigen Wicklungen 61 als auch die Kompensationswicklungen 26-28 durchsetzen. Im Unterschied zur Ausführung der Figur 2 ist der Wickelsinn der Kompensationswicklungen 26-28 der Umrichteranordnung 35 entgegengesetzt zum Wickelsinn der Drosselspulen 9-11. Auf diese Weise wird eine Kompensation der Magnetisierung des Spulenkerns 13 erreicht, wodurch eine Vormagnetisierung des Transformators 6 vermieden werden kann. Die entsprechende Richtung der resultierenden Gleichströme ist in Figur 3 durch die Pfeile 33 angedeutet.

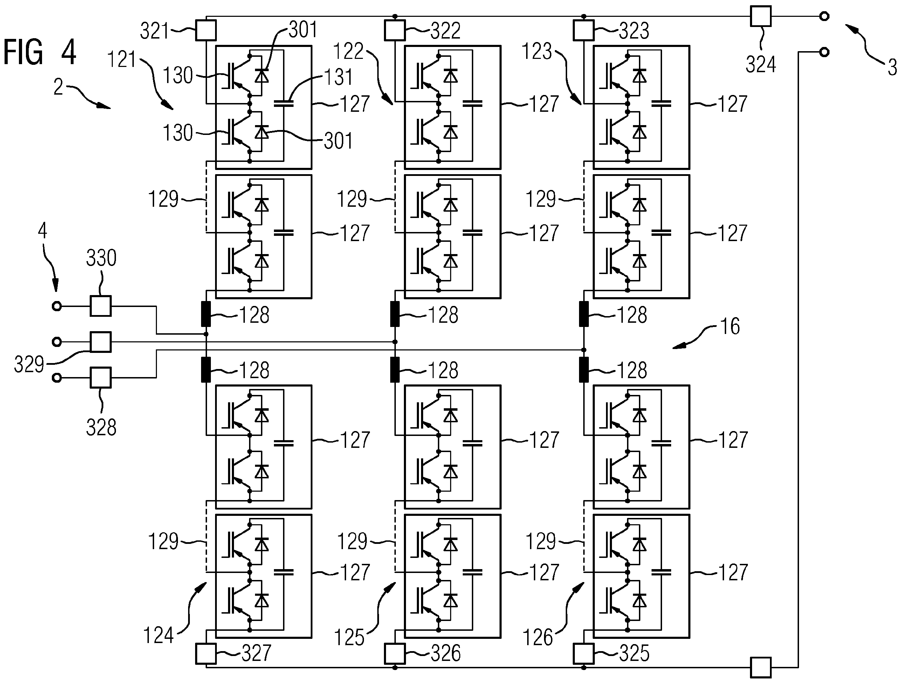

In Figur 4 ist ein Umrichter 2 für eine der Umrichteranordnungen der Figuren 1 bis 3 dargestellt. Der Umrichter 2 ist zwischen einem Wechselspannungsanschluss 4 und einem Gleichspannungsanschluss 3 geschaltet. Damit ist der Umrichter 2 gleichspannungsseitig mit einer Gleichspannungsleitung bzw. einem Gleichspannungsnetz, wechselspannungsseitig mit einem Wechselspannungsnetz verbindbar. Der Umrichter 2 ist ein modularer Mehrstufenumrichter (MMC). Der MMC weist zwischen der Gleichspannungsseite und der Wechselspannungsseite angeordnete Leistungshalbleiterventile 121-126 auf.

Jedes Leistungshalbleiterventil 121-126 umfasst eine Reihenschaltung von zweipoligen Submodulen 127 sowie eine Glättungsdrossel 128. Im in Figur 2 dargestellten Ausführungsbeispiel sind alle Submodule 127 gleichartig aufgebaut, was jedoch im Allgemeinen nicht erforderlich ist. Mittels unterbrochener Linien 129 ist in Figur 4 angedeutet, dass jedes Leistungshalbleiterventil 121-126 eine größere Anzahl von Submodulen 127 aufweisen kann als die in Figur 4 explizit dargestellten zwei Submodule 127.

Jedes Submodul 127 umfasst zwei Halbleiterschalter 130, dem jeweils eine Freilaufdiode 301 antiparallel geschaltet ist, und einen Energiespeicher in Form eines Kondensators 131. Die Submodule 127 sind somit als Halbbrückenschaltungen ausgebildet. Die Halbleiterschalter 130 der Submodule 127 sind voneinander unabhängig steuerbar.

Anstelle der Halbbrückenschaltungen können die Submodule auch beispielsweise als dem Fachmann bekannte Vollbrückenschaltungen realisiert werden.

Der Umrichter 2 umfasst ferner Messeinrichtungen 321-300, die zum Messen von Strömen und/oder Spannungen abgerichtet sind.

Zudem ist eine in Figur 4 explizit nicht dargestellte Regelungseinheit zum Regeln des Umrichters 2 vorgesehen.

## Patentansprüche

1. Umrichteranordnung (1) mit
- einem zwischen einem Wechselspannungsnetz (5) und einem Gleichspannungskreis schaltbaren Umrichter (2), der Leistungshalbleiterventile (121-126) aufweist, die sich jeweils zwischen einem Wechselspannungsanschluss (4) und einem Gleichspannungsanschluss (3) erstrecken, wobei jedes Leistungshalbleiterventil (121-126) eine Reihenschaltung zweipoliger Submodule (127) umfasst, die Leistungshalbleiter (130) umfassen, sowie
- einem wechselspannungsseitig des Umrichters (2) angeordneten Sternpunktbildner (7), der zu einem geerdeten Sternpunkt verschaltete Drosselspulen (9, 10, 11) aufweist,
**dadurch gekennzeichne**t, dass die Drosselspulen (9, 10, 11) einen gemeinsamen Spulenkern (13) aufweisen, wobei jeder Drosselspule (9, 10, 11) des Sternpunktbildners (7) eine Kompensationswicklung (26, 27, 28) zugeordnet ist, wobei die Kompensationswicklungen (26, 27, 28) in einer elektrischen Reihenschaltung zwischen dem Sternpunkt (12) und Erdanbindung (8) angeordnet sind, wobei die Kompensationswicklungen (26, 27, 28) und die Drosselspulen (9, 10, 11) einen gemeinsamen Spulenkern (13) aufweisen, wobei der Sternpunktbildner (7) zwischen einem wechselspannungsseitig des Umrichters (2) angeordneten Transformator (6) und dem Wechselspannungsanschluss (4) des Umrichters (2) angeordnet ist, wobei ein Wickelsinn der Kompensationswicklungen (26, 27, 28) und der Drosselspulen (9, 10, 11) gleichgerichtet ist, und der Sternpunktbildner (7) eine Schalteinheit (30) aufweist, die zwischen den Kompensationswicklungen (26, 27, 28) und Erdanbindung (8) angeordnet ist.

2. Umrichteranordnung (1) nach Anspruch 1, wobei jede Drosselspule (9, 10, 11) von einem ihr zugeordneten Teilkern (14, 15, 16) des gemeinsamen Spulenkerns (13) durchdrungen ist, und wobei jeder Teilkern (14, 15, 16) einen Luftspalt (17, 18, 19) begrenzt, wobei der Luftspalt (17, 18, 19) jeweils derart bemessen ist, dass jede Drosselspule (9, 10, 11) eine vorbestimmte Induktivität und einen vorbestimmten Sättigungspunkt bei einem vorgegebenen Umrichtergleichstrom aufweist.

3. Umrichteranordnung (1) nach einem der Ansprüche 1 oder 2, wobei zwischen dem Sternpunkt (12) und Erdanbindung (8) eine Nullsystemdrossel (20) angeordnet ist.

4. Umrichteranordnung (25) nach einem der vorangehenden Ansprüche, wobei die Schalteinheit (30) wenigstens einen mechanischen Leistungsschalter und/oder wenigstens einen Halbleiterschalter (31) umfasst.

5. Umrichteranordnung (25) nach einem der vorangehenden Ansprüche, wobei der Sternpunktbildner (7) einen Überspannungsableiter (23) umfasst, der zwischen dem Sternpunkt (12) und Erdanbindung (8) parallel zu den Kompensationswicklungen (26, 27, 28) geschaltet ist.

6. Umrichteranordnung (25) nach einem der vorhergehenden Ansprüche, wobei jedes Submodul (127) eine Vollbrückenschaltung mit vier abschaltbaren Leistungshalbleitern und einem Energiespeicher aufweist, die so mit dem Energiespeicher verschaltet sind, dass an Ausgangsklemmen des Submoduls eine an dem Energiespeicher abfallende Energiespeicherspannung, eine Nullspannung oder aber die inverse Energiespeicherspannung erzeugbar ist.

7. Umrichteranordnung (25) nach einem der vorangehenden Ansprüche, wobei jedes Submodul (127) eine Halbbrückenschaltung mit zwei abschaltbaren Leistungshalbleitern (130) und einem Energiespeicher (131) aufweist, die so mit dem Energiespeicher (131) verschaltet sind, dass an Ausgangsklemmen des Submoduls (127) eine an dem Energiespeicher abfallende Energiespeicherspannung oder eine Nullspannung erzeugbar ist.

## Claims

1. Converter arrangement (1) having
- a converter (2), which is switchable between an AC voltage power supply system (5) and a DC voltage circuit and has power semiconductor valves (121-126), which extend in each case between an AC voltage connection (4) and a DC voltage connection (3), wherein each power semiconductor valve (121-126) comprises a series circuit of two-pole submodules (127), which comprise power semiconductors (130), and
- a star point reactor (7), which is arranged on the AC-voltage side of the converter (2) and has inductor coils (9, 10, 11), which are interconnected to form a grounded neutral point,
**characterized in that**
the inductor coils (9, 10, 11) have a common coil core (13), wherein a compensation winding (26, 27, 28) is assigned to each inductor coil (9, 10, 11) of the star point reactor (7), wherein the compensation windings (26, 27, 28) are arranged in an electrical series circuit between the neutral point (12) and the link to ground (8), wherein the compensation windings (26, 27, 28) and the inductor coils (9, 10, 11) have a common coil core (13) wherein the star point reactor (7) is arranged between a transformer (6), which is arranged on the AC-voltage side of the converter (2), and the AC voltage connection (4) of the converter (2), wherein a winding sense of the compensation windings (26, 27, 28) and of the inductor coils (9, 10, 11) is in the same direction, and the star point reactor (7) has a switching unit (30), which is arranged between the compensation windings (26, 27, 28) and the link to ground (8).

2. Converter arrangement (1) according to Claim 1, wherein each inductor coil (9, 10, 11) has a subcore (14, 15, 16), assigned thereto, of the common coil core (13) passing through it, and wherein each subcore (14, 15, 16) delimits an air gap (17, 18, 19), wherein the air gap (17, 18, 19) is in each case dimensioned such that each inductor coil (9, 10, 11) has a predetermined inductance and a predetermined saturation point given a preset converter direct current.

3. Converter arrangement (1) according to either of Claims 1 and 2, wherein a zero-sequence network inductor (20) is arranged between the neutral point (12) and a link to ground (8) .

4. Converter arrangement (25) according to one of the preceding claims, wherein the switching unit (30) comprises at least one mechanical circuit breaker and/or at least one semiconductor switch (31).

5. Converter arrangement (25) according to one of the preceding claims, wherein the star point reactor (7) comprises a surge arrester (23), which is connected in parallel with the compensation windings (26, 27, 28) between the neutral point (12) and the link to ground (8).

6. Converter arrangement (25) according to one of the preceding claims, wherein each submodule (127) has a full-bridge circuit having four power semiconductors capable of being turned off and an energy store, with the power semiconductors being interconnected with the energy store in such a way that an energy store voltage drop across the energy store, a zero-sequence voltage or else the inverse energy store voltage is capable of being generated at output terminals of the submodule.

7. Converter arrangement (25) according to one of the preceding claims, wherein each submodule (127) has a half-bridge circuit having two power semiconductors (130) capable of being turned off and an energy store (131), with the power semiconductors being interconnected with the energy store (131) in such a way that an energy store voltage drop across the energy store or a zero-sequence voltage is capable of being generated at output terminals of the submodule (127).

## Revendications

1. Agencement (1) à onduleur, comprenant
- un onduleur (2) qui peut être connecté entre un réseau (5) de tension alternative et un circuit de tension continue et qui a des soupapes (121 à 126) à semi-conducteur de puissance, qui s'étendent chacune entre une borne (4) de tension alternative et une borne (3) de tension continue, chaque soupape (121 à 126) à semi-conducteur de puissance comprenant un circuit série de sous-modules (127) bipolaires, qui comprennent des semi-conducteurs (130) de puissance, ainsi que
- un formeur (7) de point neutre, qui est monté du côté de la tension alternative de l'onduleur (2) et qui a des bobines (9, 10, 11) de self connectées au point neutre mis à la terre,
**caractérisé en ce que**
les bobines (9, 10, 11) de self ont un noyau (13) de bobine commun, un enroulement (26, 27, 28) de compensation étant associé à chaque bobine (9, 10, 11) de self du formeur (7) de point neutre, les enroulements (26, 27, 28) de compensation étant montés suivant un circuit série électrique entre le point (12) neutre et une liaison (8) à la terre, les enroulements (26, 27, 28) de compensation et les bobines (9, 10, 11) de self ayant un noyau (13) de bobine commun, le formeur (7) de point neutre étant disposé entre un transformateur (6) monté du côté de la tension alternative de l'onduleur (2) et la borne (4) de tension alternative de l'onduleur (2), un sens d'enroulement des enroulements (26, 27, 28) de compensation et des bobines (9, 10, 11) de self étant le même, et le formeur (7) de point neutre ayant une unité (30) de coupure montée entre les enroulements (26, 27, 28) de compensation et la liaison (8) à la terre.

2. Agencement (1) à onduleur suivant la revendication 1, dans lequel chaque bobine (9, 10, 11) de self est traversée par un noyau (14, 15, 16) partiel, qui lui est associé, du noyau (13) de bobine commun et dans lequel chaque noyau (14, 15, 16) partiel délimite un entrefer (17, 18, 19), l'entrefer (17, 18, 19) étant dimensionné, respectivement, de manière à ce que chaque bobine (9, 10, 11) de self ait une inductance déterminée à l'avance et un point de saturation déterminé à l'avance pour un courant continu de l'onduleur donné à l'avance.

3. Agencement (1) à onduleur suivant l'une des revendications 1 ou 2, dans lequel une bobine (20) de système homopolaire est montée entre le point (12) neutre et la liaison (8) à la terre.

4. Agencement (25) à onduleur suivant l'une des revendications précédentes, dans lequel l'unité (30) de coupure comprend au moins un interrupteur mécanique de puissance et/ou au moins un interrupteur (31) à semi-conducteur.

5. Agencement (25) à onduleur suivant l'une des revendications précédentes, dans lequel le formeur (7) de point neutre comprend une parasurtension montée entre le point (12) neutre et la liaison (8) à la terre, en parallèle aux enroulements (26, 27, 28) de compensation.

6. Agencement (25) à onduleur suivant l'une des revendications précédentes, dans lequel chaque sous-module (127) a un circuit en pont complet ayant quatre semi-conducteurs de puissance pouvant être mis hors circuit et un accumulateur d'énergie, qui sont connectés à l'accumulateur d'énergie, de manière à pouvoir produire, aux bornes de sortie du sous-module, une tension nulle, chutant aux bornes de l'accumulateur d'énergie, ou aussi la tension d'accumulateur d'énergie inverse.

7. Agencement (25) à onduleur suivant l'une des revendications précédentes, dans lequel chaque sous-module (127) a un circuit en demi pont ayant deux semi-conducteurs de (130) de puissance pouvant être mis hors circuit et un accumulateur (131) d'énergie, qui sont connectés à l'accumulateur (131) d'énergie, de manière à pouvoir produire, aux bornes de sortie du sous-module (127), une tension chutant aux bornes de l'accumulateur d'énergie ou une tension nulle.
